# EUROPEAN PATENT APPLICATION

(11) **EP 1 111 754 A2**
(43) Date of publication of application: **27.06.2001**
(21) Application number: 00123266.9
(22) Date of filing: 26.10.2000
(51) Int. Cl.: H02J 9/00

(54) **Remote control receiver and method of controlling the same**

(30) Priority: 21.12.1999 JP 36209199
(71) Applicant: NEC CORPORATION, Tokyo (JP)
(72) Inventor: Horiguchi, Yoshihiro, NEC IC Microcomputer Systems, Kawasaki-shi, Kanagawa (JP)
(74) Representative: Betten & Resch

(57) **Abstract**

A remote control receiver of the present invention comprises power-on detecting block 7 operating on a low speed subclock during a standby mode of remote control receiver 10 on the side of electronic apparatus body 4 for decoding an instruction code signal through the medium of an infrared ray transmitted from remote control transmitter 1 in the standby mode and for outputting a code match pulse when the instruction thereof corresponds to "power-on," and interrupt controller 5 for acquiring the code match pulse output from power-on detecting block 7 to output an interrupt request signal for waking CPU 6 up. The remote control receiver suppresses an increase in power consumption caused by erroneous remote control input or input produced by a noise source in the standby mode state with the power turned off.

## Description

### BACKGROUND OF THE INVENTION

### 1. Field of the Invention:

The present invention relates to a remote control receiver and a method of controlling the same which can reduce power consumption.

### 2. Description of the Related Art:

Remote operation through remote control has been widely used in recent years for control from a distant point especially in the field of consumer electronics. Such an electronic apparatus converts a signal received at a remote control receiver into an electrical signal which is processed by a microcomputer within the apparatus. The electronic apparatus controlled through remote control in this manner operates in a standby mode state even while the power is turned off since it is necessary to receive an instruction code signal transmitted from a remote control transmitter.

Typically, the electronic apparatus in the standby mode state employs techniques such as a reduced supply voltage or a lowered oscillating frequency with a low speed subclock for reducing power consumption in its microcomputer. In recent years, further reduced power consumption is required, and particularly, a reduction in power consumption in the standby mode state represents a challenge.

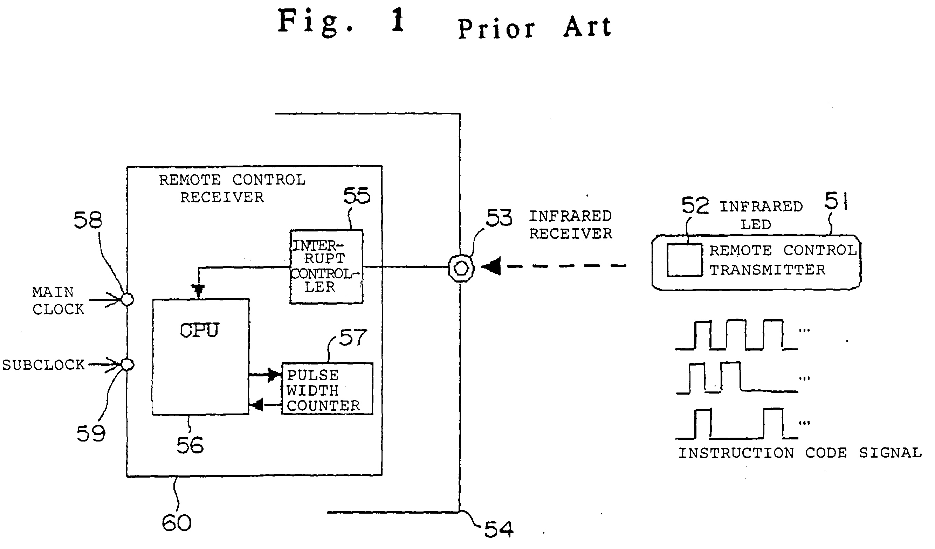

Fig. 1 is a block diagram showing the configuration of a conventional remote control apparatus for realizing such a remote control function.

The remote control apparatus comprises remote control transmitter 51 including infrared LED 52 for transmitting an instruction code signal, for example through the medium of an infrared ray, and remote control receiver 60 including infrared receiver 53 mounted at a position on the side of electronic apparatus body 54 where an infrared ray output from remote control transmitter 51 can be detected, interrupt controller 55, CPU 56, pulse width counter 57, main clock input terminal 58 and subclock input terminal 59.

Infrared receiver 53 detects the infrared ray modulated with the instruction code signal output from remote control transmitter 51, demodulates the instruction code signal, and converts it into an electric signal.

Interrupt controller 55 produces an interrupt request signal immediately after it detects the output of an instruction code from remote control transmitter 51.

CPU 56 moves from a standby mode state to a normal operation state in response to the interrupt request signal produced by interrupt controller 55 to control respective elements.

Pulse width counter 57 decodes the instruction code signal transmitted from remote control transmitter 51.

Main clock input terminal 58 is a terminal to which a main clock signal is input. Subclock input terminal 59 is a terminal to which a subclock signal is input.

Next, the operation of the apparatus is described.

In the standby mode state of CPU 56 with the power of electronic apparatus body side 54 turned off, when an instruction code signal through the medium of an infrared ray is transmitted from remote control transmitter 51, infrared receiver 53 detects the instruction code signal transmitted from remote control transmitter 51 by detecting code signal edge. Upon detection of the instruction code signal, interrupt controller 55 immediately produces the interrupt request signal to wake CPU 56 up. CPU 56 causes pulse width counter 57 to decode the instruction code signal. CPU 56 identifies the instruction contents represented by the instruction code signal from the result of the decoding of the instruction code signal by pulse width counter 57 and executes processing in accordance with the identification result.

Since the conventional remote control receiver and the method of controlling the same are provided as described above, it has a problem that any input in the standby mode state with the power turned off, for example erroneous input from the remote control transmitter or input produced by a noise source, is considered as an instruction code signal transmitted from remote control transmitter 51 to wake CPU 56 up for each of such input.

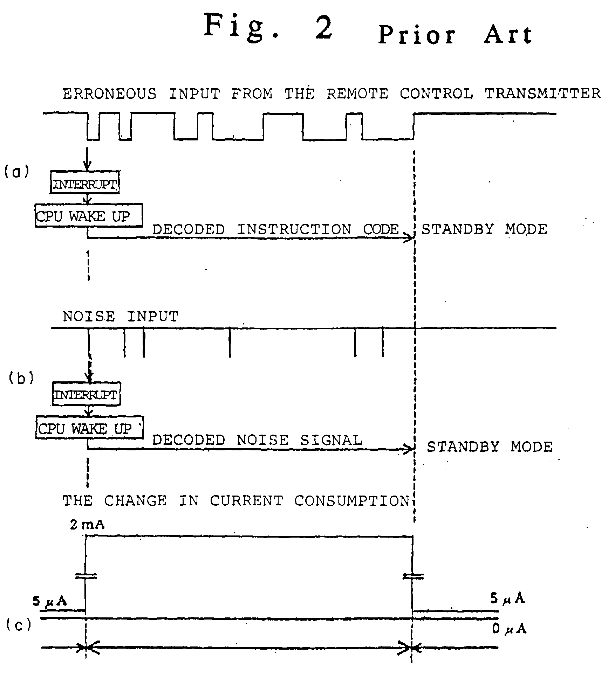

Fig. 2 is a timing chart showing the states of CPU 56 when such erroneous input from the remote control transmitter and input produced by a noise source are produced. Fig. 2(a) shows the state of CPU 56 when erroneous input from the remote control transmitter is produced, Fig. 2(b) shows the state of CPU 56 when input produced by a noise source is produced, and Fig. 2(c) shows the change in current consumption at remote control receiver 60. As shown in Fig. 2, there is a problem that since CPU 56 is woken up for each input even with the erroneous input from the remote control transmitter or the input from a noise source, the standby mode state with the power turned off involves the same current consumption as that in a normal mode (wake-up mode).

### SUMMARY OF THE INVENTION

In view of the aforementioned problem, it is an object of the present invention to provide a remote control receiver and a method of controlling the same which can suppress an increase in power consumption resulting from by erroneous input from a remote control transmitter or input produced by a noise source in a standby mode state with the power turned off.

The method of controlling a remote control receiver according to the present invention comprises the steps of receiving an instruction code signal transmitted from a remote control transmitter; when a built-in CPU is in a standby mode state in which it operates on a low speed subclock, comparing a preset power-on instruction code corresponding to power-on with an instruction code in the transmitted instruction code signal based on the low speed subclock; waking up and moving the CPU in the standby mode state to a normal mode in which the CPU operates on a high speed main clock only when the result of the comparison shows a match; decoding the instruction code in the transmitted instruction code signal in the normal mode to which the CPU has been moved; and performing control operation corresponding to the decoded instruction code.

The CPU in the standby mode state is woken up and moved to the normal mode with an interrupt request signal produced only when the result of the comparison shows a match.

In addition, the preset power-on instruction code corresponding to power-on is set immediately before the CPU moves to the standby mode state in response to power-off.

The remote control receiver according to the present invention comprises: means for receiving an instruction code signal transmitted from a remote control transmitter; means operative based on a low speed subclock when a built-in CPU is in a standby mode state in which it operates on the low speed subclock for comparing a preset power-on instruction code corresponding to power-on with an instruction code in the transmitted instruction code signal; power-on control means for waking up and moving the CPU in the standby mode state to a normal mode in which the CPU operates on a high speed main clock only when the result of the comparison shows a match; means for decoding the instruction code in the instruction code signal in the normal mode to which the CPU has been moved; and means for performing control operation corresponding to the decoded instruction code.

The power-on control means comprises a power-on detecting block including a pulse width counter for decoding the instruction code in the instruction code signal transmitted from the remote control transmitter, an input code storing register for storing the instruction code decoded by the pulse width counter, an instruction code storing register for storing the power-on instruction code corresponding to power-on, and a comparator for comparing the power-on instruction code stored in the instruction code storing register with the instruction code stored in the input code storing register, and an interrupt controller for outputting an interrupt request signal to the CPU and waking the CPU up to cause the CPU to move to the normal mode in which it operates on the high speed main clock based on output from the comparator when the power-on instruction code matches the instruction code.

The power-on instruction code set in the instruction code storing register is set immediately before the CPU moves to the standby mode state in response to power-off.

The remote control receiver and the method of controlling the same of the present invention suppress an increase in power consumption due to unnecessary wake-up by preventing the CPU from being woken up and holding the CPU in the standby mode state with the power turned off when the received instruction code is obtained from erroneous input from the remote control transmitter or input produced by a noise source.

As described above, according to the present invention, when the CPU is in the standby mode state, the preset power-on instruction code is compared with the transmitted instruction code through the operation on the subclock similarly to the CPU. Only when the comparison result shows a match, the CPU in the standby mode state is woken up and moved to the normal mode in which it operates on the high speed main clock. Consequently, the CPU is woken up only when the power-on instruction code is received but the CPU is not woken up when the received instruction code is erroneous remote control input or input from a noise source, thereby presenting the effect of allowing suppression of increased power consumption due to unnecessary wake-up of the CPU in response to input other than the power-on instruction code.

### BRIEF DESCRIPTION OF THE DRAWINGS

Fig. 1 is a block diagram showing the configuration of a conventional remote control apparatus;
Fig. 2 is a timing chart representing the states of a CPU when erroneous remote control input and input produced by a noise source are produced in the conventional remote control apparatus;
Fig. 3 is a block diagram showing the configuration of a remote control receiver of an embodiment of the present invention;
Fig. 4 is a block diagram showing the configuration of a power-on detecting block in the remote control receiver of the embodiment of the present invention;
Fig. 5 is a timing chart when an instruction code signal for "power-on" is input from a remote control transmitter in the remote control receiver of the embodiment of the present invention;
Fig. 6 is a diagram showing a format of an instruction code in the remote control receiver of the embodiment of the present invention; and
Fig. 7 is a timing chart when an instruction code signal other than that for "power-on" is input from the remote control transmitter in the remote control receiver of the embodiment of the present invention.

### DESCRIPTION OF THE PREFERRED EMBODIMENT

An embodiment of the present invention is hereinafter described in detail with reference to the drawings.

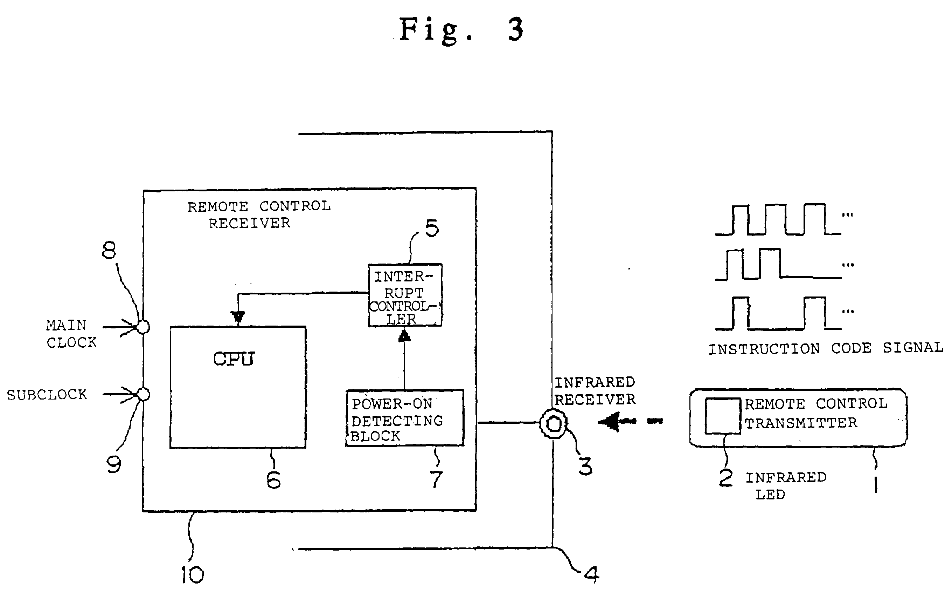

Fig. 3 is a block diagram showing the configuration of a remote control apparatus of the embodiment of the present invention. The remote control apparatus comprises remote control transmitter 1 including infrared LED 2 for emitting an infrared ray, for example, and remote control receiver 10 including infrared receiver 3 mounted on the side of electronic apparatus body 4, interrupt controller (power-on control means) 5, CPU 6, power-on detecting block (power-on control means) 7, main clock input terminal 8, and subclock input terminal 9. The side of electronic apparatus body 4 represents the side of the electronic apparatus body of a consumer apparatus including this remote control receiver, for example.

Remote control transmitter 1 transmits an instruction code signal through the medium of an infrared ray from infrared LED 2 to electronic apparatus body 4 to remotely control the operation of electronic apparatus body 4.

Power-on detecting block 7 operates on a low speed subclock in a standby mode of remote control receiver 10 of electronic apparatus body 4, decodes the instruction code signal through the medium of an infrared ray transmitted from remote control transmitter 1 during the standby mode, and outputs a code match pulse when the instruction is "power-on." The decoding of the instruction code signal is performed by comparing the instruction code in the instruction code signal transmitted from remote control transmitter 1 with a preset instruction code corresponding to "power-on" and outputting the code match pulse when the two contents match.

Interrupt controller 5 acquires the code match pulse output from power-on detecting block 7 and outputs an interrupt request signal for waking CUP 6 up.

CPU 6 operates on the low speed subclock in the standby mode for reducing power consumption. CPU 6 can be woken up by the interrupt request signal output from interrupt controller 5. The wake-up of CPU 6 switches the operating clock from the low speed subclock to a high speed main clock to allow the start of normal mode (wake-up mode) operation.

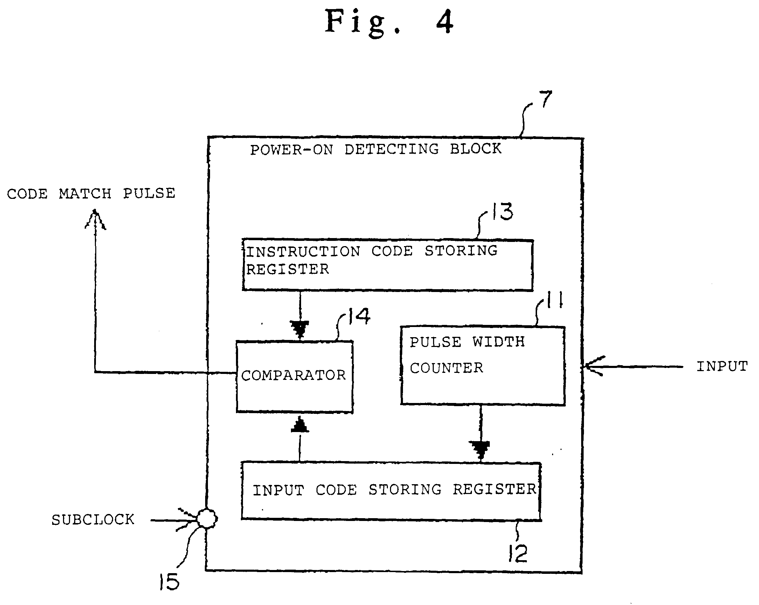

Fig. 4 is a block diagram showing the configuration of power-on detecting block 7 which comprises pulse width counter 11, input code storing register 12, instruction code storing resister 13, comparator 14, and subclock input terminal 15.

Pulse width counter 11 counts the pulse widths in the input instruction code signal and decodes the instruction code transmitted from remote control transmitter 1.

Input code storing register 12 is a register for storing the instruction code decoded by pulse width counter.

Instruction code storing register 13 is a register for previously storing the instruction code corresponding to "power-on" and an arbitrary value can be set therein. It should be noted that the instruction code for "power-on" may be stored in instruction code storing register 13 immediately before CPU 6 is moved to the standby mode in response to power-off of electronic apparatus body 4, or may be stored in instruction code storing register 13 before that. In addition, rewriting of the instruction code into instruction code storing register 13 may be allowed based on the subclock even after the transition to the standby mode.

Comparator 14 compares the instruction code in instruction code storing register 13 and the instruction code in input code storing register 12 and outputs the code match pulse if the two contents match.

Next, the operation of the apparatus is described.

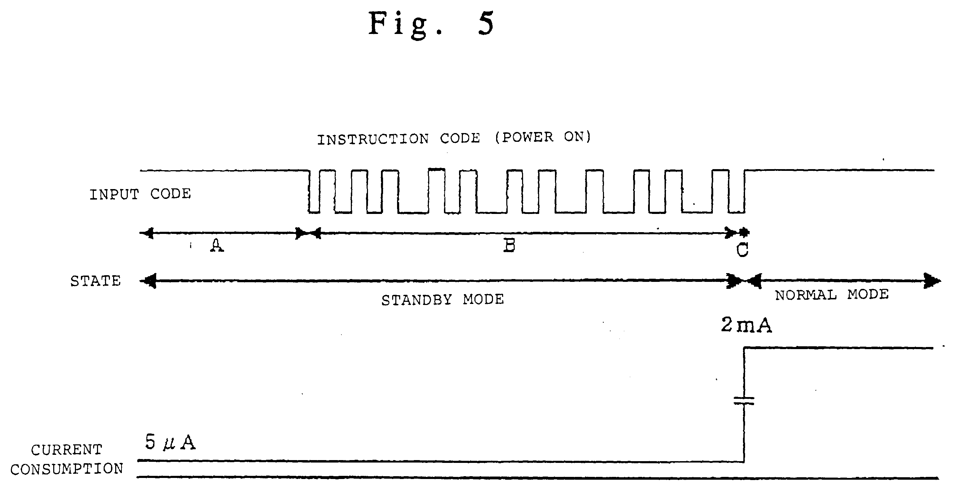

First, description is made for the operation when an instruction code signal for "power-on" is input from remote control transmitter 1 using a timing chart in Fig. 5.

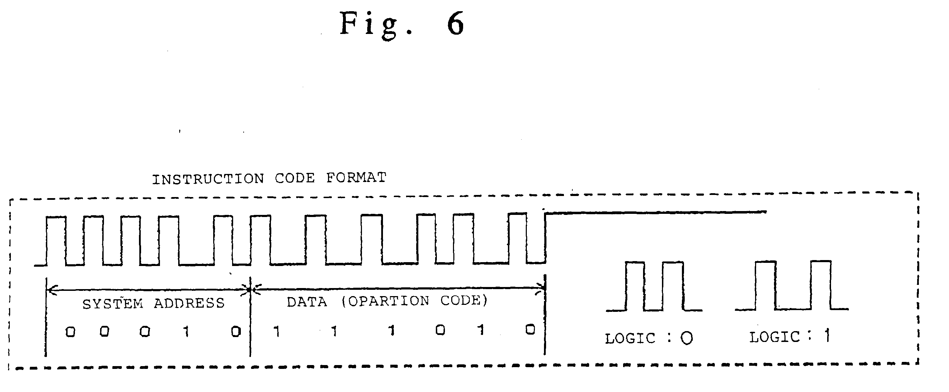

For example, when a code for "power-on" (operation code) is defined as "111010" and a system address as "00010" (see Fig. 6), an instruction code comprising the aforementioned code "111010" and the system address "00010" is stored in instruction code storing register 13 in power-on detecting block 7, and thereafter, electronic apparatus body 4 is moved to the standby mode state with the power turned off.

In period A shown in Fig. 5, electronic apparatus body 4 is in the standby mode state with the power turned off, and remote control receiver 10 operates on the low speed subclock for reducing power consumption.

In period B, when an instruction code signal transmitted from remote control transmitter 1 is received, pulse width counter 11 within power-on detecting block 7 operating on the low speed subclock decodes the instruction code transmitted from remote control transmitter 1 while the standby mode status is maintained in remote control receiver 10.

The format of the instruction code is typically defined with a combination of High level widths and Low level widths of pulses, and an example of the format is shown in Fig. 6. In the example shown in Fig. 6, a value is defined as "0" when a High level width is equal to or larger than a Low level width of a pulse, while a value is defined as "1" when a High level width is smaller than a Low level width. A system with the system address "00010" performs operation based on the data (operation code) "111010."

At the point indicated by character C in Fig. 5, the result of the decoding by pulse width counter 11 is stored in input code storing register 12, and comparator 14 compares it with the instruction code within instruction code storing register 13. Since the comparison result shows a match in this case, comparator 14 outputs a code match pulse. The code match pulse is acquired by interrupt controller 5 which outputs an interrupt request signal for waking CPU 6 up. CPU 6 is woken up in response to the interrupt request signal from interrupt controller 5, and switches the operating clock from the low speed subclock to the high speed main clock to operate in the normal mode (wake-up mode).

In the operation in the normal mode, CPU 6 which has moved to the normal mode acquires, from infrared receiver 3, a subsequently transmitted instruction code signal for rewind, reproduction or the like when electronic apparatus body 4 is a video recording and reproducing apparatus, or a subsequently transmitted instruction code signal for channel tuning or the like when electronic apparatus body 4 is a television set. The instruction code therein is decoded and processing is performed in accordance with the decoded instruction code.

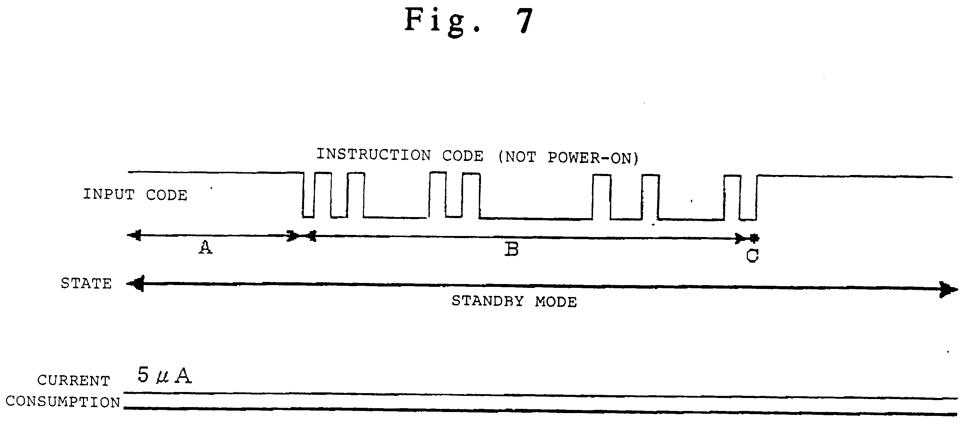

Next, description is made for the operation when a signal other than a signal including the instruction code for "power-on" is input from remote control transmitter 1 using a timing chart in Fig. 7.

The operation during the period indicated by characters A, B until the point indicated by character C is the same as that when the instruction code signal for "power-on" is input. However, the instruction code does not match the instruction code within instruction code storing register 13 in this case. Thus, since a code match pulse is not output at the point indicated by character C and an interrupt request signal for waking CPU 6 up is not produced, remote control receiver 10 still remains in the standby mode state.

In this manner, remote control receiver 10 is provided with power-on detecting block 7 which operates on the low speed subclock when electronic apparatus body 4 is in the so-called standby mode state with the power turned off, decodes the instruction code signal received at infrared receiver 3, and produces the code match pulse only when it includes the instruction code for "power-on." Interrupt controller 5 receives the code match pulse output from power-on detecting block 7 and produces the interrupt request signal for waking up CPU 6 which is in the standby mode state. CPU receives the interrupt request signal, switches the operating clock from the subclock to the main clock, and moves to the normal mode (wake-up mode) state.

Therefore, in the standby mode state with the power turned off, it is possible to receive only the instruction code for "power-on" of instruction code signals transmitted from remote control transmitter 1 to wake CPU 6 up. Since power consumption in the standby mode state is approximately 5 *µ* A while power consumption in the normal mode (wake-up mode) is approximately 2 mA which is 400 times larger than the former, power consumption can be constantly limited to 5 *µ* A unless CPU 6 is woken up in response to the code for "power-on" in the standby mode state with the power turned off.

As described above, according to the present invention, CPU 6 is not woken up in response to erroneous remote control input (for example, input for fast forward, rewind, reproduction or the like while the power is turned off) and input produced by a noise source during the standby mode state with the power of electronic apparatus body 4 turned off. Since CPU 6 is not woken up in response to a signal other than the true instruction code signal indicating "power-on," the present invention has the effect of allowing suppression of current consumption during the wake-up operation.

The aforementioned embodiment illustrates power-on detecting block 7, operating on the subclock when CPU 6 is in the standby mode state, which is provided separately from CPU 6 and comprises pulse width counter 11, input code storing register 12, instruction code storing register 13 and comparator 14. However, since an apparatus with a remote control function usually includes a pulse width counter provided on the side of an electronic apparatus body for decoding an instruction code transmitted from a remote control transmitter, the existing pulse width counter may be used and additionally provided with input code storing register 12, instruction code storing register 13 and comparator 14 such that it operates on the subclock when CPU 6 is in the standby mode state for realizing functions similar to those of the aforementioned power-on detecting block 7, in which case similar effects to those of the embodiment can be achieved.

## Claims

1. A method of controlling a remote control receiver (10), characterized by comprising the steps of:
when a built-in CPU (6) is in a standby mode state in which the CPU (6) operates on a low speed subclock, comparing a preset power-on instruction code corresponding to power-on with an instruction code in a transmitted instruction code signal based on the low speed subclock;
waking up and moving the CPU (6) in the standby mode state to a normal mode in which the CPU (6) operates on a high speed main clock only when the result of the comparison shows a match; and
performing control operation corresponding to the instruction code in the transmitted instruction code signal by the CPU (6) in the normal mode to which the CPU (6) has been moved.

2. The method of controlling a remote control receiver (10) according to claim 1, characterized in that the CPU (6) in the standby mode state is woken up and moved to the normal mode with an interrupt request signal produced only when the comparison result shows a match.

3. The method of controlling a remote control receiver (10) according to claim 1 or 2, characterized in that the preset power-on instruction code corresponding to power-on is set immediately before the CPU (6) moves to the standby mode state in response to power-off.

4. A remote control receiver (10) for receiving an instruction code signal transmitted from a remote control transmitter (1), decoding an instruction code in the received instruction code signal, and performing various types of control in accordance with the decoded instruction code, characterized by comprising power-on control means (7), operative based on a low speed subclock when a CPU (6) is in a standby mode state in which the CPU (6) operates on the low speed subclock, for comparing a preset power-on instruction code corresponding to power-on with the instruction code in the transmitted instruction code signal and for waking up and moving the CPU (6) in the standby mode state to a normal mode in which the CPU (6) operates on a high speed main clock only when the result of the comparison shows a match.

5. The remote control receiver (10) according to claim 4, wherein said power-on control means (7) comprises,
a power-on detecting block (7) including a pulse width counter (11) for decoding the instruction code in the instruction code signal transmitted from the remote control transmitter (1), an input code storing register (12) for storing said instruction code decoded by said pulse width counter (11), an instruction code storing register (13) for storing the power-on instruction code corresponding to power-on, and a comparator (14) for comparing the power-on instruction code stored in said instruction code storing register (13) with the instruction code stored in the input code storing register (12), and
an interrupt controller (5) for outputting an interrupt request signal to the CPU (6) and waking the CPU (6) up to cause the CPU (6) to move to the normal mode in which the CPU (6) operates on the high speed main clock based on output from the comparator (14) when the power-on instruction code matches the instruction code.

6. The remoter control receiver (10) according to claim 5, wherein the power-on instruction code set in the instruction code storing register (13) is set immediately before the CPU (6) moves to the standby mode state in response to power-off.
